Europäisches Patentamt

European Patent Office

Office européen des brevets

(19)

(11) **EP 0 588 984 B1**

(12) **EUROPÄISCHE PATENTSCHRIFT**

(45) Veröffentlichungstag und Bekanntmachung des Hinweises auf die Patenterteilung:
**28.10.1998 Patentblatt 1998/44**

(21) Anmeldenummer: **92916880.5**

(22) Anmeldetag: **12.08.1992**

(51) Int Cl.⁶: **G01N 27/333**

(86) Internationale Anmeldenummer:
**PCT/EP92/01838**

(87) Internationale Veröffentlichungsnummer:
**WO 93/21520 (28.10.1993 Gazette 1993/26)**

(54) **VERFAHREN ZUR VERLÄNGERUNG DER EINSATZDAUER UND VERMINDERUNG DER TEMPERATURABHÄNGIGKEIT IONENSELEKTIVER KUNSTSTOFFMEMBRAN-ELEKTRODEN**

METHOD FOR EXTENDING THE USEFUL LIFE AND REDUCING THE TEMPERATURE DEPENDENCE OF ION-SELECTIVE PLASTIC-MEMBRANE ELECTRODES

PROCEDE VISANT A PROLONGER LA DUREE DE VIE ET A DIMINUER LA SENSIBILITE THERMIQUE D'ELECTRODES A MEMBRANE EN PLASTIQUE SELECTIVES D'IONS

(84) Benannte Vertragsstaaten:
**AT CH FR GB**

(30) Priorität: **10.04.1992 DE 4212149**

(43) Veröffentlichungstag der Anmeldung:
**30.03.1994 Patentblatt 1994/13**

(73) Patentinhaber: **Daimler-Benz Aerospace Aktiengesellschaft
81663 München (DE)**

(72) Erfinder: **CAMMANN, Karl
D-4400 Münster (DE)**

(56) Entgegenhaltungen:
**EP-A- 0 068 505          US-A- 5 078 856**

**Beschreibung**

Die Erfindung bezieht sich auf ein Verfahren zur Verlängerung der Einsatzzeit und bei minimaler Temperaturabhängigkeit einer ionenselektiven Meßkette nach dem Oberbegriff des Anspruchs 1.

Die ionenselektive Potentiometrie hat sich seit der kommerziellen Verfügbarkeit einer Reihe von mehr oder weniger selektiven Elektroden für bestimmte Kationen und Anionen in den 60er Jahren und seit dem Erscheinen der ersten Monographlen [1] zu diesem als Renaissance der pH-Meßtechnik bezeichneten Analysenverfahren als wichtige Bestimmungsmethode zur Erfasssung der freien Ionenkonzentratlon sehr bewährt.

Die ionenselektive Potentiometrie entspricht meßtechnisch weitgehend der klassischen pH-Meßtechnik auf der Basis der extrem selektiven pH-Glasmembran-Elektroden. Für eine genaue Bestimmung bestimmter Ionenkonzentrationen benötigt man neben der betreffenden, für das zu bestimmende Ion selektiven, Meßelektrode nur eine übliche potentialkonstante Bezugselektrode (z.B. auf Basis Kalomel oder Ag/AgCl) sowie ein entsprechend hochohmiges Millivoltmeter (pH-Meter) mit einer Genauigkeit von +/- 0,1 mV. Mit einer apparativ derartig einfachen Meßanordnung lassen sich Ionenkonzentrationen zwischen der Sättigungsgrenze und wenigen ppb zuverlässig erfassen. Die Güte der Analysenergebnisse (d.h. Richtigkeit der Analyse) wird i.d.R. durch die ionenselektive Meßelektrode bestimmt. Sie arbeitet im Sinne eines echten Chemosensors selektiv und reversibel, d.h. sie kann - anders als Teststäbchen oder Prüfröhrchen - Konzentrationsänderungen in beiden Richtungen anzeigen. Letzteres ist für kontinuierliche on-line Messungen eine unabdingbare Forderung.

Der Zusammenhang zwischen der Meßkettenspannung und der Konzentration eines zu bestimmenden Ions ist mit hinreichender Genauigkeit durch eine erweiterte Nernst-Gleichung gegeben:

$$U = U^{\circ} + R \; T/z_M \; F \; \ln (c_M + K_{M\text{-}I} \; c_I^{zM/zI})$$

mit

| | |
|---|---|
| U = | Meßkettenspannung |
| Uo = | Meßkettenspannung bei in - 1 |
| R = | Faraday-Konstante |
| T = | Temperatur |
| $z_M$ = | Wertigkeit und Ladung des Meßions |
| $Z_I$ = | Wertigkeit und Ladung des Störions |
| $c_M$ = | Konzentration des Meßions |
| cl = | Konzentration des Störions |
| $K_{M\text{-}I}$ = | Selektivitätskoeffizient zwischen Meß- und Störion |

Bei dieser Analysenfunktion wird davon ausgegangen, daß sich die Ionenstärke zwischen Kalibrierung und Messung nicht ändert. Gegebenenfalls ist eine geringe Vorbereitung der Probelösungen durch Verdünnung mit einer Ionenstärke-Einsteller-Lösung, die evtl. auch noch Maskierungschemikalien für besonders störende Ionen enthält, notwendig. Eine besonders elegante automatisierbare Probenvorbereitungsart ist die Fließinjektionsanalyse (FIA). Hier werden nur wenige Mikroliter der Probe in einen Trägerstrom eines geeigneten Elektrolyten, der im mL/min Bereich an der Meßkette vorbeiströmt (Durchflußmeßzelle), injiziert und die auftretende Peakhöhe zur Quantifizierung herangezogen. Je nach der effektiven Strömungsgeschwindigkeit des Grund(Träger)elektrolyten und dem Totvolumen der potentiometrischen Meßkette lassen sich so durchaus 60 Proben in der Minute injizieren, was auf eine quasi-kontinuierliche Messung (Zeitkonstante ca. 1 min) hinausläuft. Der Vorteil der Kombination der bekannten Technik der Fließinjektion mit der der ionenselektiven Potentiometrie wurde schon früh erkannt [2]. Der Trägerflüssigkeitsstrom (Carrierlösung) kann so für die betreffende Meßelektrode optimal gestaltet werden. Durch eine geeignete Ionenzusammensetzung dieses Grundelektrolyten läßt sich bei dieser Kombination auch eine Meßkette ohne Überführung aufbauen, was neben einer erhöhten Genauigkeit (kein schwankendes Diffusionspotential an der Phasengrenze: Bezugselektroden-Elektrolyt/Meßlösung) auch konstruktionstechnische Vorzüge bietet, da die Bereltstellung einer zusätzlichen Bezugselektroden-Elektrolytlösung für längeren on-line Betrieb entfällt, bzw. von der FIA-Carrierlösung mitübernommen wird.

Bei einem Einsatz der ionenselektiven Potentiometrie für eine kontinuierliche Meßwerterfassung analog den pH-Durchflußarmaturen oder im Rahmen einer FIA-Anordnung ist die unter realen Bedingungen erzielbare Einsatzdauer senr wichtig. Die Klasse der sog. Flüssigmembran-Elektroden In ihrer bedeutsamsten Bauweise mit einer kunstoffverfestigten, flüssigkeitsähnlichen Membran (überwiegend auf der Basis PVC, Siloxan, Polyacrylamid, usw.) haben in Gegensatz zu den anderen Membranelektroden mit sich erneuernden oder erneuerbaren Oberflächen nur eine begrenzte Lebensdauer unter diesen Meßbedingungen. Die Lebensdauer, d.h. die Gewährleistung der zentralen elektroanalytischen Kriterien wie Selektivität, Nachweisgrenze, Nernst-Verhalten, Stabilität und Anzeigegeschwindigkeit, derartiger Kunststoffmembran-Elektroden wird generell durch zwei Effekte beschnitten:

a) Das Ausbluten von selektivitätsgebenden Membranbestandteilen (Weichmacher und elektroaktive Verbindung)

b) Die Verschlechterung des Verhältnisses der Standardausstauschstromdichte von Meß- zu Störionen wegen der langsamen Erhöhung der Konzentration von Störionen in der Membranphase

Aus EP-0 068 505 A1 ist bereits ein Verfahren zur Verlängerung der Einsatzeit einer Meßkette nach dem Oberbegriff des Anspruchs 1 bekannt. Um ein Ausbluten des Weichmachers aus der Membran zu verhindern, ist dabei im Elektrodenbehälter ein ringförmiger Kanal vorgesehen, der mit Weichmacher gefüllt ist. Der Weichmacher steht damit mit dem radial äußeren Bereich der Membran in Kontakt, während er von dem Elektrolyten durch eine Trennwand getrennt ist. Zur Belüftung des ringförmigen Kanals sind in der Behälterwand Kanäle vorgesehen, die durch Membranen abgedeckt sind. Die bekannte Meßkette weist neben einer komplizierten Konstruktion eine kurze Einsatzdauer sowie triftende Meßelektrodenpotentiale auf.

Aufgabe der Erfindung ist es, ein Verfahren zur Verlängerung der Einsatzeit und Verminderung der Temperaturabhängigkeit einer ionenselektiven Meßkette bereitzustellen.

Dies wird erfindungsgemäß mit dem im Anspruch 1 gekennzeichneten Verfahren erreicht. In den Ansprüchen 2 bis 13 sind vorteilhafte Ausgestaltungen der verwendeten Meßkette angegeben. Im Anspruch 14 ist ein Verfahren zur Messung der Nitrat- und Ammoniumkonzentration im Grundwasser angegeben, bei dem das Verfahren nach dem Anspruch 1 angewendet wird. Durch die Ansprüche 15 bis 26 wird dieses Verfahren zur Messung der Nitrat- und Ammoniumkonzentration im Grundwasser in vorteilhafter Weise ausgestaltet.

Erfindungsgemäß wird der Effekt a) also dadurch verhindert, dass nur Lösungen unmittelbar an der ionenselektiven Kunststoffmembran angrenzen, die mit den dort zum Ausbluten neigenden Verbindungen übersättigt bzw. gesättigt sind. Mit anderen Worten: nach der Erfindung wird die sog. Außen- und Innenlösung einer ionenselektriven Kunststoffmembranelektrode so konditioniert, dass die treibende Kraft für das Ausbluten (=Verteilung zwischen der meist lipophilen Kunststoffmembran und den unmittelbar angrenzenden, meist wäßrigen Lösungen), das ist der Gradient des chemischen Potentials an den betreffenden Phasengrenzflächen, nahezu Null wird.

Der zweite Faktor (Effekt b), der die Lebens- oder Einsatzdauer einer ionenselektiven Kunststoffmembranelektrode beeinflußt, wird erfindungsgemäß dadurch optimiert, daß die Standard-Stromdichte für das betreffende Weßion dadurch gegenüber allen potentiell störenden Ionen vergrößert wird, in dem ein in wäßrigen Lösungen schwerlösliches Meßionensalz (Meßion mit einem Gegenion) der ionenselektiven Kunststoffmembran als zusätzliche Komponente beigefügt wird. Alternativ oder zusätzlich kann diese Aufgabe auch durch ein ständiges Konditionieren beider Membranoberflächen mit dem Meßion, mit Ausnahme während des eigentlichen Meßvorganges, gelöst werden. Die während der Einsatzeit derartiger Membranelektroden zu beobachtende Zunahme der Standardaustauschstromdichte für insbesonders lipophilere Störionen, die die Selektivität zunehmend verschlechtern, läßt sich erfindungsgemäß dadurch verringern, daß sie vor Kontakt mit der Meßelektrodenoberfläche durch ein geeignetes Verteilungsgleichgewicht abgereichert werden. Alle erfindungsgemäßen Maßnahmen wurden beispielhaft für eine Ammonium- und Nitrat-selektive Kunststoffmembranelektrode getestet und zeigten in Kombination nicht nur eine drastische Verbesserung der Einsatzdauerzeit um den Faktor > 4 (d.h. > 6 Monate bei direktem Kontakt mit großen Probenvolumina im m3/d Bereich) sondern auch noch eine Verbesserung der Stabiliät des Nernstfaktors (Steigung der Kalibrierkurve (U gegen lg cM) und der Nachweisgrenze. Erst durch diese erfindungsgemäßen Verbesserungen lassen sich die verschiedenen und bekannt unterschiedlichen Kunststoffmembran-Zusammensetzungen für die verschiedensten Meßionen für Meßelektroden in langlebigen on-line Monitoren (z. B. zur Grundwasserüberwachung im Grundwasserleiter positioniert) verwenden. Die erfindungsgemäßen Verfahren zur Einsatzdauerverlängerung werden kombiniert mit einem neuen Bewertungsverfahren zur Deponie- und Altlastenüberwachung mit Hilfe eines on-line Ammonium- und Nitrat-Monitors. Obwohl in dieser Offenbarung auch ein Grundwasserüberwachungsgerät, das mit diesen neuen Elektroden bestückt ist, beschrieben wird, haben die erfindungsgemäßen Verbesserungen jedoch Allgemeingültigkeit und gelten für alle ionenselektiven Meßketten, die eine Meßelektrode mit Kunststoffmembran besitzen.

Der Stand der Technik bei den für Grundwasserüberwachungsaufgaben wichtigsten Ionen Ammonium und Nitrat weist eine Reihe von Veröffentlichungen und Patenten zum Thema ammonium- resp. nitrationenselektive Kunststoffmembranelektrode auf, die alle nur hinsichtlich der Selektivität und hinsichtlich der Nachweisgrenze bei reinen synthetischen Lösungen optimiert wurden. Es existiert bezüglich der Kombination der verschiedensten lebensdauerverlängernden Maßnahmen sowie hinsichtlich der Interpretation von sich gegenläufig verändernden Konzentrationswerten von Ammonium und Nitrat im Grundwasser im Umfeld undichter Deponien oder Altlasten noch keine Vorveröffentlichung. Kerngedanke der Anwendung der Vorrichtungen in einem bestimmten Meßverfahren ist die Tatsache, daß bei allen älteren Deponien und/oder Altlasten im zentralen Bereich, der bei Undichtigkeiten mit dem Grundwasser in Verbindung stehen kann, anaerobe Bedingungen herrschen. Die dort i.d.R. vorhandenen Mikroorganismen sind in der Lage Nitrationen zu Ammoniumionen zu reduzieren. Dadurch kommt es zu einer drastischen Änderung des N03-/NH4+-Verhältnisses, wenn die Oberstrommeßwerte mit den Unterstromwerten (Grundwasserströmung durch eine undichte Deponie oder Altlast) verglichen werden.

In einem japanischen Patent (JP 02271247 A2) vom 6.11.1990 wird die Verwendung von quarternären Ammonium- oder Phosphoniumsalzen als elektroaktive, selektivitätsgebende Verbindung bei anionensensitiven Kunststoffmembranelektroden beschrieben. Es werden eine Reihe von elektroaktiven Verbindungen der obigen Klasse in Polymermembranelektroden auf der Basis PVC beschrieben. Meßlon ist in allen Fällen das Chloridanion in biologischen Flüssigkeiten. Die längere Einsatzzeit soll durch eine Mischung dieser Verbindungen mit verschiedenen Alkylresten in Verbindung mit unterschiedlichen Dissoziationskonstanten, durch Oberflächenaktivität und durch eine geeignete Orientierung der symmetrischen und nicht-symmetrischen Moleküle an der Phasengrenze erreicht werden. Der Einsatzbereich in biologischen Flüssigkeiten läßt aber darauf schließen, daß die Volumina an Probelösung, die jeweils in Kontakt mit der Meßelektrodenoberfläche stehen und wegen ihrer Menge ein entsprechend großes Extraktlonspotentlal für den Weichmacher und die elektroaktlve Verbindung darstellt, limitiert ist und nicht, wie im vorliegenden Fall, in den Kubikmeterbereich hineinragt. Es werden als Weichmacher die üblichen Verbindungen, z.B. o-Nitrophenyl-octylether eingesetzt und keinerlei weitere Vorkehrungen zur Verhinderung des Ausblutens getroffen.

Im japanischen Patent (JP 02231560 A2) vom 13.9.1990 wird ein nitrationenanzeigender Feldeffekt-Transistor (ISFET) beschrieben. Die selektivitätsgebende PVC oder Polyurethan Membran enthält als elektroaktlve Verbindung ebenfalls eine quarternäre Ammoniumverbindung (z.B. Trioctylmethylammonium) in ihrer Nitratform. Sie befindet sich, wie bei ISFETs üblich über dem Gate-Bereich des Transistors. Über die notwendigen Weichmacher wird nichts berichtet. Es ist allgemein bekannt, daß ISFETs wegen der kleinen Größe (< 1 mm2) der elektroaktiven Fläche keine lange Lebensdauer haben, weil das Reservoir an Weichmachern und elektroaktiver Verbindung entsprechend klein ist. Zusätzlich neigen sie zu einem relativ starken Driften, weil die innere Kontaktfläche: ionenselektive Kunststoffmembran/Gateoberfläche thermodynamisch nicht definiert ist. Die Lebensdauer derartiger FETs wird meistens durch das Ablösen der Membran von der Gateoberfläche definiert.

Das europäische Patent EP 42157 A1 vom 23.12.1981 beschreibt allgemein die Zusammensetzung kationen- und anionensensitiver Kunststoffmembran-elektroden. Für die Anionensensitivität wird ein Anionenaustauscher, z.B. das bekannte System mit einem großen lipophilen Kation (quartärnere Ammoniumverbindung) vorgeschlagen. Membranmaterial ist ein Styrol-Kopolymer. Über die Einflüsse von Weichmachern wird nichts berichtet. Der Einsatzbereich derartiger Membranelektroden soll die Analyse biologischer Flüssigkeiten sein.

Ein japanisches Patent (JP 55136950) vom 15.10.1980 verzichtet ganz auf einen Weichmacher und verwendet statt dessen anstelle von nur 1-3% einer elektroaktiven Verbindung hier im Falle des Nitrat-Meßions 15-30% einer quarternären Ammoniumverbindung (mit 1-4 C7-16 Alkylgruppen). Als Membranträger werden PVC, Polycarbonat, Slllkongumml usw. vorgeschlagen. Es ist aber dem Fachmann bekannt, daß die Nernst-Eigenschaften (Meßbereich und Nachweisgrenze) durch zu hohe Konzentrationen an der elektroaktiven Verbindung verschlechtert werden.

In einem deutschen Patent (DE 2652703) vom 26.5.1977 wird die Herstellung nitratsensitiver PVC-Membranen offenbart und auch der Zusammenhang zwischen der Alkylkettenlänge einer quarternären Ammoniumverbindung als elektroaktive Phase und der Elektrodenfunktion beschrieben. Die Empfindlichkeit nimmt mit steigender Kettenlänge ab. Untersucht wurden Tetraoctylammonium-, Tetranonylammonium-, Tetradecylammonium-, Tetraundecylammonium-, Tetradodecylammonium-, Tetratridecylammonium- und Tetratetradecylammonium-Kationen in der Nitratform.

Für ammonlumselektive Elektroden sind weniger Patentanmeldungen bekannt, da die Verwendung einer der am besten geeignetsten elektroaktiven Verbindungen für dieses Kation bereits in den 60er Jahren in der Biochemie Stand der Lehre war. Seit dieser Zeit, spätestens aber seit Erscheinen der ersten Monographien über ionenselektive Elektroden [1] ist bekannt, daß das Antibiotikum Nonactin, einem cyclischen Peptid, diese geeignete Verbindung ist.

In einem japanischen Patent (JP 54116292) vom 10.9.1979 wird eine ammoniumsensitive Polymermembran beschrieben, die über 135 Tage halten soll. Als elektroaktive Verbindung für NH4+-Kationen wird Polynactin oder Tetranactin (10%), PVC und Weichmacher verwendet. Die längere Lebensdauer rührt wahrscheinlich von der höheren Konzentration an elektroaktiver Verbindung her.

In allen oben erwähnten Patenten werden keine technischen Anleitungen speziell zum Thema einer längeren Einsatzdauer von ionenselektiven Polymermembran-Elektroden unter realen Bedingungen offenbart.

Eine kurze Zeit gab es kommerzielle trägergestützte Flüssigmembran-Elektroden, wobei der elektrochemische inerte Träger (Membranfilter) in direktem Kontakt mit einem Lösungsmittel, in dem die elektroaktive Verbindung gelöst war, stand. Dieser direkte Kontakt mit einer Flüssigkeit, die nur durch Kapillarkräfte in den Poren des Trägers gehalten wurde, war so instabil, daß die Produktion eingestellt worden ist.

Die Verwendung labiler und positionsabhängiger Flüssigmembran-Elektroden scheidet bei Langzeitmessungen im Durchflußbetrieb und bei mobilen Sonden, die in allen Lagen noch messen sollen, aus. Bei Anwesenheit oberflächenaktiver Substanzen in der Meßlösung besteht die Gefahr, daß die flüssige, lonensensitive organische Phase aus den Mikroporen des elektrochemisch inerten Trägermaterials ausströmt und Messungen unmöglich werden.

Die Erhöhung der Konzentration der elektroaktiven Verbindung zur Verringerung von Ausbluterscheinungen hat negative Auswirkungen auf das potentiometrische (Nernst-gemäße) Verhalten. Die Elektrodensteilheiten (=analytische Empfindlichkeit - Steigung der Kalibrierfunktion) werden geringer und die Nachweisgrenze wird verschlechtert. Da sich im Laufe der Einsatzzeit die Konzentration der elektroaktiven Verbindung in der Polymermembran ständig ändert, ändern sich auch die damit zusammenhängenden Elektrodeneigenschaften entsprechend, was zu häufigen Kontroll- und Kalibriervorgängen führt, die bei einer wartungsarmen on-line Anwendung unerwünscht sind. Die effektive Konzentration der elektroaktiven Verbindung in der Membran bestimmt nicht nur das Nernst-Verhalten (Steilheit und Nachweisgrenze), sondern auch die Selektivität. Bei Kontakt der ionensensitiven Membran mit großen Probenmengen, wie für Durchflußanordnungen typisch, werden trotz der Erhöhung der Konzentration der elektroaktiven Verbindung entsprechende Mengen aus der Membran extrahiert. Nach den Fick'schen Diffusionsgesetzen geschieht der Transport dieser Verbindungen durch die Phasengrenze Membran/wäßrige Meßlösung bei höheren Konzentrationen in der Membran sogar entsprechend schneller.

Eine weitere Alternative zur Verminderung der Extraktion wichtiger Membranbestandteile in die Meßlösung besteht in einer gesteigerten Quervernetzung der Bestandteile, z.B. durch Verwendung von Zweikomponenten-Klebharzen (auf Epoxidbasis) oder photopolymerisierbaren Verbindungen. Hier steht die Tatsache im Wege, daß bei zu hochvernetzten Polymermembranen die elektrochemisch entscheidende Standard-Austauschstromdichte für die Meßionen verkleinert wird. Je unbeweglicher die elektroaktiven Verbindungen (Ionenaustauscher oder Ionencarrier) in der Membran sind, desto geringer ist die Standardaustauschstromdichte. Die Folgen sind: geringere Steilheit, schlechtere Nachweisgrenze, langsameres Ansprechen, schlechtere Selektivität. Der Stand der Technik, d.h. die herrschende Theorie verlangt andererseits nach mobilen elektroaktiven Verbindungen, sonst hätte die Bezeichnung Ionophore keine Berechtigung. Auch ist dem Fachmann bekannt, daß selbst Polymermembranen, die in einer Polysiloxanmatrix photopolymerisierte Weichmacher und elektroaktive Verbindungen enthielten und bei denen keinerlei Ausbluten nachweisbar war, keine entsprechend gestiegene Einsatzdauer zeigten. In all den Fällen, wo trotz nicht nachweisbarem Extraktionseigenschaften, die Lebensdauer der ionenselektiven Membran immer noch begrenzt ist, liegt die Ursache in einer "umgekehrten Extraktion" lipophiler Störionen aus der Meßlösung in die Membranphase. Wenn ihre Konzentration dort ansteigt, dann führt dies zu einem Anstieg ihrer Standard-Austauschstromdichte an der Phasengrenze Membran/Meßlösung und sie werden dadurch zunehmend potentialbestimmend und wirken dadurch störend auf die potentiometrischen Eigenschaften dieser Membran für die Meßionen.

Der Stand der Technik sowie der allgemeine Kenntnisstand auf diesem Gebiet zeigen bisher keine Vorschläge zur Lösung des Problems der begrenzten Einsatzdauer von ionenselektiven Elektroden auf der Basis Polymermembran, insbesonders bei Durchflußmessungen größerer Meßlösungsvolumina, auf. Darüberhinaus existieren keine Vorveröffentlichungen zur Kombination langlebiger Nitrat- und Ammoniumsensoren in Form eines Überwachungssystems für Altlasten oder Deponien.

Ein wichtiger Vorteil ist bei der Erfindung das Zwischenschalten einer wäßrigen Innenphase bei der Nachlieferung ausblutenden Materials. Eine besonders vorteilhafte Ausführungsform wird dann erhalten, wenn der wäßrige innere Elektrolyt (der typischer Weise zur inneren Potentialableitung dient) einer Polymermembran-Elektrode an den wichtigen Verbindungen über- oder gesättigt wird. Dann erfolgt im Falle einer Extraktion des Weichmachers oder der elektroaktiven Verbindung in die Meßlösung eine ständige Nachlieferung aus der Innenlösung. Die effektiven Konzentrationen sind sehr klein und dementsprechend gering ist der Einfluß einer derartigen Innenlösung auf das elektrochemische Verhalten. Dies ist nicht der Fall, wenn diese Verbindungen in direktem Kontakt mit der Polymermembran gebracht werden. Erfindungsgemäß bedeutsam ist also das Zwischenschalten der wäßrigen Innenelektrolytlösung. Eine Art Übersättigung bezüglich des Aufnahmevermögens der inneren Polymermembranoberfläche ist gegeben, wenn die fraglichen Verbindungen (betreffender Weichmacher und elektroaktive Verbindung) über einen inerten Träger mit wesentlich größerer Oberfläche der Innenlösung zugefügt wird. In einer vorteilhaften Ausführungsform wird chromatographisches Trägermaterial mit demgleichen Membrancocktail wie zur Herstellung der Elektrode verwendet, überzogen und in einer durchlöcherten Kapsel in der Innenlösung fixiert. Zur Erzielung noch höherer Übersättigungen der Innenlösung an den extrahierbaren (ausblutbaren) Membranbestandteilen kann bei dem Überzug auf das chromatographische Trägermaterial (z.B. Chromosorb, Firebrick, Silikagel, Aluminiumoxid etc.) der eigentlich polymere Träger (PVC, Polycarbonat, Polyacrylamid, Polysiloxane, etc.) entfallen. Der betreffende Weichmacher und die betreffende elektroaktive Verbindung (entsprechend der Membranzusammensetzung der Polymer-Meßelektrode) wird zweckmäßigerweise auf dieses chromatographische Trägermaterial mit besonders großer Oberfläche im gleichen Verhältnis wie in der Polymer-Meßelektrode aufgezogen, obwohl - wie durch umfangreiche Meß-Serien festgestellt wurde - auch andere Verhältnisse funktionieren.

Die weiterer Vorteil der Erfindung ist, daß die Anreicherung von lipophileren Störionen in der Membranphase während der Kontaktzeit mit der Probelösung verhindert wird, damit der weiter oben erwähnte Effekt b) nicht stattfindet. Dies wird dadurch erreicht, daß das Meßion in der Innenlösung In relativ hoher Konzentration eingebracht wird. Als Folge davon liegt es dort i.d.R. mit der elektroaktiven Verbindung assoziiert (z.B. Ionophor-gebunden oder als Ionenpaar mit der Ionenaustauscherverbindung) vor und kann als solche in die Polymermembran eindringen und so von der Innenseite der Polymermembran her die in die Meßlösung extrahierten Komponenten ersetzen. Da das Angebot an Meßionen dadurch erheblich über dem von Störionen aus der Meßlösung liegt, wird dadurch die dominierende Meßionenaustauschstromdichte ständig aufrecht erhalten. Bei höheren Störionenkonzentrationen, die aber bei dem vorgesehenen Verfahren der Grundwasserüberwachung ausgeschlossen sind, muß eine Fließinjektionsanalyse durchgeführt werden, weil dadurch der Kontakt der Meßlösung mit lipophileren Störionen so kurz gehalten werden kann, daß das thermodynamische Verteilungsgleichgewicht sich nicht einstellen kann. Zusätzlich wird, entgegen dem allgemeinen Vorgehen bei der FIA, hier dem Trägerelektrolyten eine merkliche Meßionenkonzentration zugesetzt. Dadurch soll zusammen mit den von der Innenseite der Membran herandiffundierenden Molekülen der elektroaktiven Verbindung, die ebenfalls Meßionen in die Membran transportiert, die dominierende Austauschstromdichte der Meßionen über möglichst lange Zeit erhalten bleiben.

Mit diesen erfindungsgemäßen Verfahren konnten bisher im Falle typischer Nitrat- und Ammoniumselektiver PVC-Membran-Elektroden (von Zigarettengröße) Einsatzzelten von über einem Jahr erzielt werden.

Die ISE mit dieser drastisch verlängerten Einsatzdauer (nicht mit Lebens- oder Lagerdauer zu verwechseln, bei denen störende Extraktionsvorgänge verhindert werden könnnen) werden in einem erfindungsgemäßen Verfahren zur Überwachung von Deponie- oder Altlastendurchbrüchen in das Grundwasser eingesetzt. Neu ist bei diesem Verfahren, daß ein Kontakt der Deponie oder des kontaminierten Bodens mit dem Grundwasser nicht durch das Auftreten irgendwelcher Leitelemente oder -verbindungen angezeigt wird, sondern durch eine systematische und gegenläufige Konzentrationsänderung von Nitrat und Ammonium im Grundwasserstrom vor und hinter der Kontaktzone. Grundlage für eine Abnahme der Nitratkonzentration und Zunahme der Ammoniumkonzentration ist die Umwandlung von Nitrat-Stickstoff in Ammonium-Stickstoff durch die mikrobiologische Aktivität in diesen belasteten Zonen. Eine reine Auswaschung von Bodenschichten durch Regenwasser zeigt entweder einen Anstieg sowohl der Nitrat- als auch der Ammoniumkonzentration oder nur der Nitratkonzentration. Erst ein Anstieg der Ammoniumkonzentration bei einem gleichzeitigen Abfall der Nitratkonzentration verglichen zu den Werten vor dem Durchströmen des belasteten Gebietes zeigt auf, daß ein Gefahrenpotential vorhanden ist, weil der Grundwasserkörper mit der kontaminierten Zone in unmittelbarem Kontakt steht.

Die Erfindung wird anhand von Ausführungsbeispielen näher erläutert. Es zeigen:

Fig. 1a    eine tradionelle Meßkette,

Fig. 1b    die Meßkette mit verlagertem Isothermen = Schnittpunkt

Fig. 2    eine Skizze des Nltratsensors mit selbst regenerierender PVC-Membran,

Fig. 3    Kalibrierkurven des $NH_4+$-Sensors in 0,01 mol/L Tris-$HC_1$ (pH 7,0)

1: Direkt nach Fertigstellung; Nachweisgrenze $2 \times 10^{-6}$ mol/L, Steilheit 55,1 mV/KD
2: Nach über einjähriger Betriebszeit; Nachweisgrenze $1,4 \times 10^{-6}$ mol/L, Steilheit 54,8 mV/KD und

Fig. 4    den schematischen Aufbau eines Grundwasser-Überwachungssystem.

Für einen wirklich langfristig einsetzbaren Nitrat- und Ammonium-Sensor vor allem unter nicht-thermostatisierten Bedingungen ist eine effektive und richtige Temperaturkompensation von zentraler Bedeutung. Der erfindungsgemäße Ansatz geht davon aus, die bisher üblichen Potentialableitungs-Systeme der ionenselektiven Elektroden, die auf der Basis einer Elektrode zweiter Art (meist Ag/AgCl) beruhen, durch reine Redox-Systeme mit inerten Metallelektroden (z.B. Platin, Gold usw.) zu ersetzen, wobei erfindungsgemäß nur ganz bestimmte Redox-Systeme mit genau definierten Randbedingungen zum Tragen kommen.

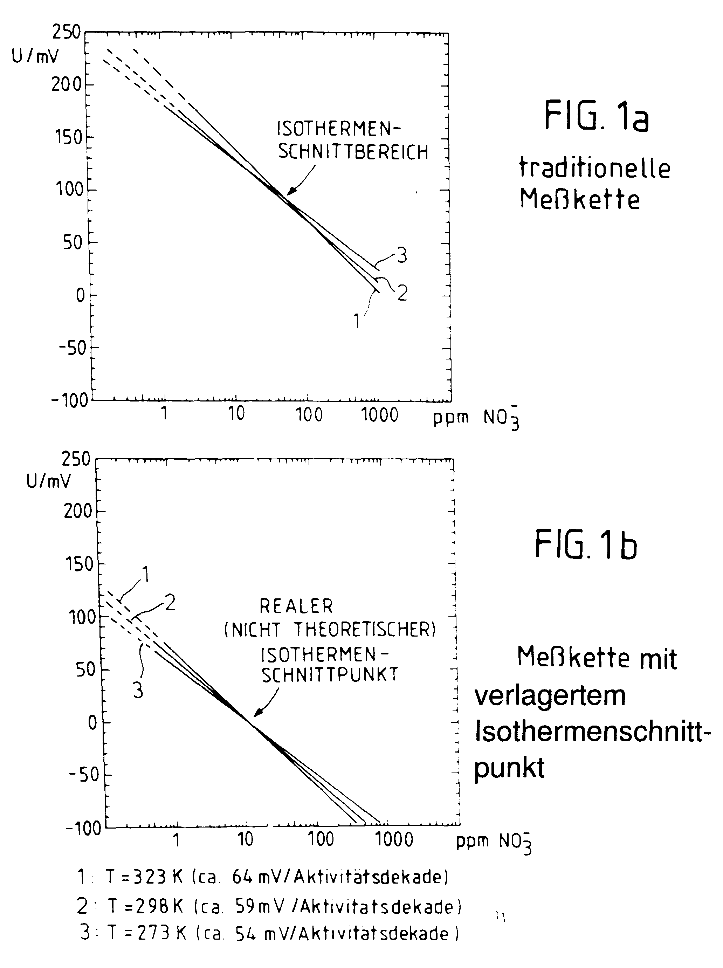

Die erste Bedingung, die zur Erfüllung der erfindungsgemäßen Aufgabe (hier: geringe Temperaturabhängigkeit) eingehalten werden muß, ist der Einsatz e es stabilen (sich außer dem Ladungszustand chemisch nicht verändernden) Redox-Systems mit möglichst hoher Standardaustauschstromdichte (oder anders ausgedrückt: mit möglichst hoher Reversibilltät). Die zweite wesentliche Bedingung ist, daß der sog. Isothermenschnittpunkt der potentiometrischen Meßkette so gelegt wird, daß er

a) in ungefährer Mitte des zu messenden Konzentrationsbereiches und
b) bei ca. 0 mV zu liegen kommt. Dies ist in Fig. 1 verdeutlicht.

Diese Verlagerung des Isothermenschnittpunktes gemäß Abb. 1b wird erfindungsgemäß dadurch bewerkstelligt, daß empirisch unter Zugrundelegung der späteren Einsatzbedingungen (Eintauchtiefe, Thermodiffusionspotential-Einfluß etc.) das Konzentratlonsverhältnis oxidierte Form/reduzierte Form des Redox-Systems im Sinne einer entsprechenden Potentialverschiebung zu variieren ist. Als weitere Variationsparameter zur Erzielung des erfindungsgemäßen Effektes dient die Meßionenkonzentration in der Innenlösung der ISE und das Verhältnis oxidierte Form/reduzierte Form des Redox-Systems, das in der äußeren Bezugselektrode verwendet wird; d.h. es wird erfindungsgemäß eine klassische Bezugselektrode durch eine neuartige ersetzt. Die innerhalb der ISE verwendeten Redox-Systeme müssen nicht mit denen identisch sein, die in der äußeren Bezugselektrode verwendet werden. Letztere wird vorzugsweise ebenfalls aus einem Draht (Oberfläche) eines inerten Edelmetalls (Platin, Gold etc.) gebildet und das reversible Redox-System wird im Konzentrationsbereich gesättigte Lösung bis 10-4 mol/L durch einen zusätzlichen Stromschlüssel (= Doppelstromschlüssel-Bezugselektrode), der mit KCl-Lösung gefüllt ist, von der Probelösung getrennt. Entsprechend der geschickten Auswahl an Redox-Systemen mit bekanntem Standardelektrodenpotential Uo läßt sich letzteres bei jeder Veränderung des [0x]/[Red]-Verhältnisses um den Faktor 10 um 59,16 mV/z (z - Anzahl der ausgetauschten Elektronen) bei 25 oC verschieben. Größere Verschiebungen lassen sich durch Kombination verschiedener Redox-Systeme mit unterschiedlichen Uo-Werten erreichen.

Die folgenden Beispiele sollen die Bedeutung der Erfindung unterstreichen und zeigen symptomatisch die drastischen vorteilhaften Eigenschaftsverbesserungen auf.

Beispiel 1: Nitrat-ISE mit Vorrichtung zur Lebensdauerverlängerung

Ein besonders vorteilhafter Nitrat-Sensor auf der Basis einer Polymermembran-Meßelektrode gelingt mit folgender Membranzusammemsetzung:

50-80 Gew% Weichmacher (z.B. Dibutylsebacat, Dibutylphthalat)
20-50 Gew% PVC
1- 5 Gew% elektroaktive Verbindung (z.B. quarternäres Ammoniumsalz)

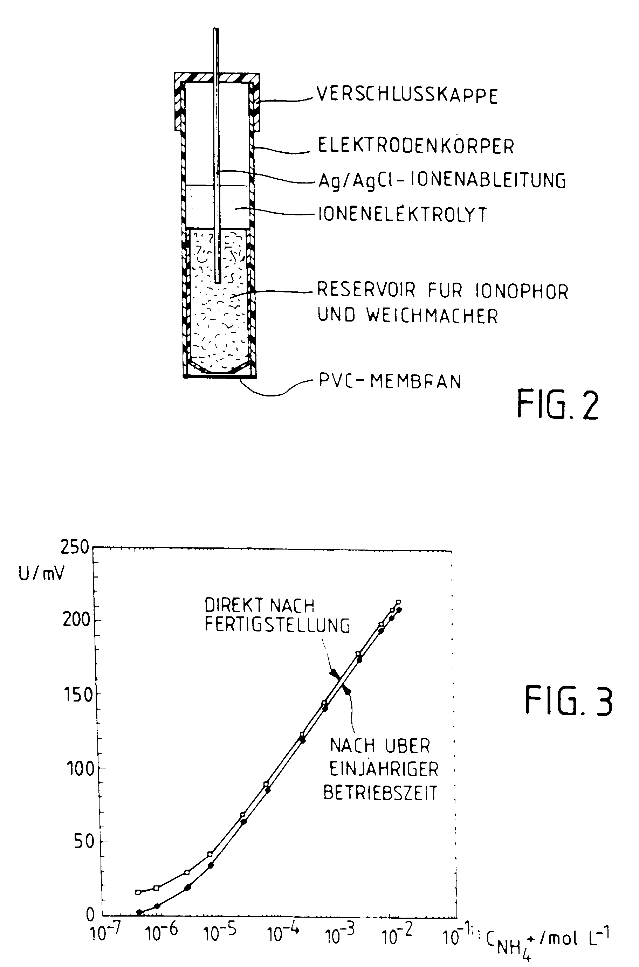

Die ionenselektive Polymermembran wird nach den üblichen Vorschriften [1] in Dicken zwischen 30-200 µm hergestellt. Die fertige Membran wird dann auf einen PVC-Elektrodenkörper geklebt, auf dessen Innenseite sich über die ganze Länge vier ca. 0,5 mm tiefe Rinnen befinden, die gleichmäßig innerhalb des PVC-Rohres angeordnet sind. Als Reservoir für die Mischung aus Weichmacher und elektroaktiver Verbindung dient hier eine Anreicherungssäule der Firma J.T. Baker. Das Pakkungsmaterial besteht hierbei aus einem phenylsubstituierten modifizierten Kieselgel der Partikelgröße 40 µm. Wegen der großen spezifischen Oberfläche ist dieses Material in der Lage, eine erhebliche Menge an Weichmacher und darin gelöster elektroaktiver Verbindung zu adsorbieren. Es sind aber auch andere Materialien mit großer spezifischer Oberfläche verwendbar. Vor der Beladung dieser Anreicherungssäule wird zunächst eine Mischung aus 1,5 g Tetradodecylammoniumbromid, gelöst in 25 mL Dibutylphthalat, hergestellt, die anschließend mehrmals mit 0,1 mol/L NaNO$_3$ Lösung ausgeschüttelt wird. Dieser Vorgang dient zum Umkonditionieren des modifizierten Tetradodecylammoniumbromids in die Nitratform. Die organische Phase wird mit Hilfe einer Spritze durch die Baker-Säule gesaugt. Danach wird die äußere Ummantelung auf einer Länge von ca. 25 mm abgesägt, wobei der spritzenförmige Ansatz entfällt. Dieser patronenartige Einsatz paßt genau in PVC-Elektrodenkörper von 11 mm Innendurchmesser. Er wird mit der abgesägten Spitze voraus von oben vorsichtig in die Polymermembran-Elektrode soweit nach unten geschoben, bis er einen Abstand von ca. 1 mm zur PVC-Membran aufweist (siehe Abb. 2). Dann wird die mit dieser Vorrichtung modifizierte Elektrode mit der Innenlösung aufgefüllt. Die Innenlösung enthält 0,1-10-3 mol/L Nitratlösung sowie eine geeignete Menge Chlorid, um für eine Ag/AgCl-Ableitung ein stabiles Potential zu erzielen und gleichzeitig den Arbeitspunkt der gesamten Meßkette in den Isothermenschnittpunkt zu verlegen (unter Verzicht auf eine Redox-Systern-Ableitung).

Diese Nitrat-Polymermembran-Meßelektrode mit der Vorrichtung zur Verlängerung der Lebensdauer zeigt für den linearen Bereich der Kalibrierkurve Steilheiten von 58,4 mV +/- 10 % rel.. Im Gegensatz zu allen herkömmlichen Polymermembran-ISE blieb die Steilheit über die gesamte Lebensdauer (> 1 Jahr !) konstant. Ebenso verhielt es sich mit der Selektivität. Der für Grundwassermessungen wichtigste Selektivitätskoeffizient ist der gegenüber Chloridionen. Er blieb ebenfalls über die ganze Zeit konstant bei 0,01 ! Die Nachweisgrenze im ppb-Bereich blieb ebenfalls über diese Zeit konstant. Diese hervorragenden Verbesserungen, die erst einen Einbau dieser ISE in ein Grundwassermeßsystem möglich machte, wurden in Durchflußmessungen mit echten Grundwasserproben (mit L/h Durchflußmengen) gemessen. Das Ende der Lebensdauer der erfindungsgemäßen Vorrichtung war nicht, wie üblich durch ein Ausbluten wichtiger Membranbestandteile, erreicht, sondern durch Verkalkung bzw. Biofouling (Algen) der Membranoberfläche, die aber erst nach > 1 Jahr auftrat und anders verhindert werden muß. Hier hilft ein gelegentliches Entfernen der Überzüge durch Entkalkungsmittel (z.B. EDTA) bzw. Bioziden.

Beispiel 2: Querstörungsfreie Ammonium-ISE mit Verfahren zur Lebensdauerverlängerung

Für eine störungsfreie Ammoniumbestimmung in Trink- oder Grundwasserproben reicht die Selektivität der bekannten NH4$^+$ ISE gegenüber anderen einwertigen Kationen i.d.R. nicht aus. Daher ist eine Abtrennung der Ammoniumionen hier vorteilhaft. Dies kann in-situ und on-line durch Alkalisieren (pH > 10) erfolgen, da unter diesen Bedingungen alles Ammonium als NH3-Gas vorliegt. Letzteres kann durch eine gasdurchlässige Membran (z.B. aus hydrophoben Material Teflon, Silikongummi etc.) in eine neutrale Vorlage (z.B. 0,01 mol/L Tris-HCl Puffer pH = 7,00) aufgefangen werden, in der es wieder zu 100 % als $NH_4^+$-Ion vorliegt. Da keine anderen Störionen die hydrophobe Membran durchdringen können, liegt das Ammoniumion in dieser Lösung ohne Störionen vor und die typischen $NH_4^+$-selektiven ISE auf Nonactin Basis [1] können nunmehr verwendet werden. Da bei diesem Vorgehen die Probe nicht in unmittelbaren Kontakt mit der eigentlichen Meßelektrode kommt, sondern ein zweiter Hilfselektrolyt als Vorlage für das $NH_3$ Gas dient, kann diese Lösung bequem mit dem Weichmacher und der betreffenden elektroaktiven Verbindung ge- oder übersättigt werden. Vorteilhaft ist die Zugabe der üblicherweise zum Ausbluten neigenden Verbindungen sofort beim Ansetzen dieser Pufferlösung unter Erhitzen. Weitere Additive betreffen der Vermeidung von Biofouling (z.B. Azid-Zugabe) bzw. der Einstellung eines konstanten Bezugselektrodenpotentials in einer vorteilhaften Meßkette ohne Überführung. Wenn die Vorlagelösung kontinuierlich im μL/min Bereich an der Meßelektrode vorbeiströmt, sind mittels eines FIA-ähnlichen Aufbaus quasi-kontinuierliche und absolut störungsfreie Ammoniummessungen in Grund- und Trinkwasserproben möglich.

Die Fig. 3 zeigt zwei Kalibrierkurven des oben beschriebenen $NH_4^+$-Sensors zwischen denen über ein Jahr im ständigen Kontakt mit der Hilfslösung (unter Durchflußbedingungen) lag. Die Steilheit hat sich von anfänglich 55,1 auf 54,8 mV/Dekade nur unwesentlich verändert! Die Nachweisgrenze hatte sich sogar von 2 x 10-6 auf 1,4 x 10-6 mol/L (ppb Bereich 1) verbessert. Der Vorteil gegenüber üblichen Verfahren bei Durchflußmessungen mit ISE, bei denen die Lebensdauer nur bei wenigen Monaten liegt, ist klar ersichtlich.

Ähnliche Lebensdauerverlängerungen können allgemein auch dann beobachtet werden, wenn bei ISE-Messungen ohne Abtrennschritt (wie im obigen Beispiel) die Probelösung vor Kontakt mit der Meßelektroden-Membran über eine Konditionierungs-Säule (wie im Beispiel 1 erwähnt) geleitet wird, die die betreffenden Verbindungen zwecks in-situ Sättigung enthält.

Beispiel 3: Anordnung zur Langzeitmessung von Ammonium und Nitrat im Grundwasser (Überwachungs-Meßsonde)

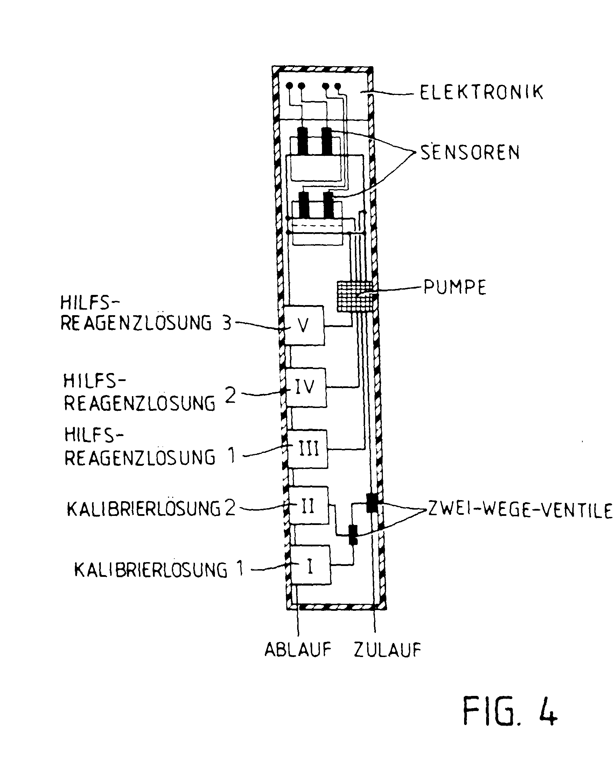

Polymermembran-ISE obiger Bauweise werden in diesem Beispiel für einen vorteilhaften Einsatz längerlebender Meßelektroden zu einem kompletten automatisch arbeitenden Meßsystem vereinigt. Die Abb. 4 zeigt schematisch den Aufbau einer Überwachungs-Meßsonde zur kontinuierlichen oder quasikontinuierlichen Ammonium- und Nitratbestimmung in Grund- oder Trinkwasserproben. Die Meßsonde befindet sich in einem dichten Gehäuse und paßt in die typischen 4 Zoll Bohrlöcher zur Grundwassersondierung. Der Vorrat an Kalibrier- und Konditionierungslösungen reicht für einen etwa einjährigen Betrieb im Grundwasser. Zur Überwachung von Deponien oder Altlasten muß mindestens jeweils eine Meßsonde im Oberstrombereich (vor dem Passieren der Gefahrenstelle) und mindestens eine im Unterstrombereich installiert sein. Gegebenenfalls kann ein weiteres Paar dieser Meßsonden als Vergleich in einem ähnlichen Abstand voneinander ins Grundwasser außerhalb einer Gefahrenstelle positioniert werden.

Die Grundwasserprobe wird mittels einer zentralen Quetschrollen-Schlauchpumpe über ein Filter im mL/min Bereich angesaugt. Das Filter kann aus einer Konditionierungs-Säule (mit Weichmacher und elektroaktiver Verbindung beladen) bestehen. Für die Nitrat-Messung wird die Probe noch mit einer 0,01 mol/L NaF-Lösung (III) zur Einstellung einer konstanten Ionenstärke versetzt bevor sie in einer Durchflußmeßzelle an einer nach Beispiel 1 konstruierten Nitrat-Meßelektrode vorbeiströmt. Als Referenz- oder Bezugselektrode kann hier auch an entsprechender Position eine Fluoridelektrode eingesetzt werden, da der Fluoridgehalt im Hilfselektrolyt konstant bleibt. Dadurch erspart man sich das Nachfüllen von Stromschlüsselelektrolyt bei herkömmlichen Bezugselektroden. Die beiden Kalibrierlösungen I und II bestehen aus $NH_4NO_3$-Lösungen, die den gewünschten Meßbereich der Sonde für Ammonium- und Nitrationen einrahmen. Diese Kalibrierlösungen sind mit Bioziden gegen Algenbefall geschützt. Sie werden nur bei Bedarf zur Kalibrierung anstelle der Probenlösung durch die FIA-ähnliche Anlage geleitet. Ein Teil der Probeströmung wird für die Ammoniumbestimmung abgezweigt und mit 0,1 mol/L NaOH (IV) versetzt bevor dieser Teilstrom durch die Gasdiffusionszelle geleitet wird. Hier durchströmt die alkalische Lösung einen besonders flachen Kanal vor einer gaspermeablen Membran. Auf der anderen Seite dieser Membran strömt in einem ebenso flachen Kanal die sog. Acceptorlösung für das durchtretende $NH_3$ Gas (V: 0,15 mol/L Tris-HCL pH 7,0). Diese Lösung wird zur Erzielung einer hohen Empfindlichkeit im ppb-Bereich langsamer als die Probelösung transportiert. Als Ammonium-Sensor wird eine in Beispiel 2 erwähnte $NH_4^+$-selektive Polymermembranelektrode verwendet, die aber zusätzlich noch eine innere Konditionierungspatrone zur Lebenszeitverlängerung enthält. Zusätzlich ist die Lösung V mit dem betreffenden Weichmacher und der betreffenden elektroaktiven Verbindung ge- bzw. übersättigt. Als Bezugselektrode kann ein chloridisierter Silberdraht verwendet werden, da keine anderen störenden Ionen auf diese Seite der gaspermeablen Membran gelangen können.

Die Flüssigkeitsströme werden - um Chemikalien zu sparen - möglichst mit miniaturisierten Förderpumpen konstanter Förderleistung transportiert. Da die ionenselektive Meßkette in Durchflußzellen mit geringem Totvolumen betrieben werden können, reichen Förderleistungen im μL/min Bereich völlig aus. Die hierbei anfallenden Ionenkonzentrationen können bequem durch eine Ionenaustauschersäule am Auslauf der Sonde aufgefangen werden, damit keine Verunreinigungen in das Grundwasser gelangen. Im Interesse eines besonders sparsamen Umganges mit den fünf Lösungen in der Meßsonde kann anstelle der kontinuierlichen Messung auch diskontinuierlich gemessen werden. Dazu werden die Meßelektroden vorteilhafterweise in der Warteposition in einer konditionierten (mit Weichmacher und elektroaktiver Verbindung gesättigter) Kalibrierlösung aufbewahrt. Durch das konstante Angebot an Meßionen wird die Polymermembran positiv, d.h. im Interesse einer hohen Standardaustauschstromdichte für Meßionen konditioniert.

Die eigentliche Messung erfolgt bei dieser Arbeitsweise automatisch entweder in vorgegebenen Zeitintervallen oder bei Bedarf, wenn sich Konzentrationsänderungen in der Probe abzeichnen. Diese können mit reduzierter Genauigkeit und Zuverlässigkeit durch eine ISE-Meßkette unmittelbar hinter dem Probenzulaufsfilter angezeigt werden. Vorteilhaft ist hier eine Meßkette, bei der eine Ammonium-ISE gegen eine Nitrat-ISE geschaltet werden, also auf eine Bezugselektrode mit nachzufüllenden Stromschlüsselelektrolyten auch an dieser Stelle verzichtet wird. Die oben erwähnte Kombination von zwei Meßelektroden zeigt bei konstanten $NH_4^+$- und $NO_3^-$-Werten eine konstante Meßkettenspannung an. Steigt bei einem Anschluß der Ammonium-ISE an den Meßelektrodeneingang und Anschluß der Nitrat-ISE an den Bezugselektrodeneingang des Meßgerätes der Ammoniumgehalt der Meßlösung an, so steigt bei gleich bleibenden Nitratgehalt die Meßkettenspannung an. Bei steigenden Nitratgehalten und konstant bleibenden Ammoniumgehalten ergibt sich bei dieser Schaltung eine Verringerung der Meßkettenspannung. Da es äußerst unwahrscheinlich ist, daß eine gegenläufige Konzentrationsveränderung beider Ionen genau die Nernstzusammenhänge kompensieren, kann dieses Meßkettensignal zur Steuerung der genauen, sich daran anschließenden Messung herangezogen werden. Die Meßhäufigkeit kann hierbei der Änderungsgeschwindigkeit angepaßt werden, um genauere Aufzeichnungen plötzlich eintretender Konzentrationsänderungen beider Ionen zu erhalten.

Beispiel 4: Minimierung des Temperaturkoeffizienten von ISE-Meßketten

ISE-Meßketten für Langzeitmessungen werden besser ohne die üblichen Bezugselektroden mit einem KCl-Stromschlüssel aufgebaut, da dies eine zusätzlich Lösung in der Meßsonde verlangt und weil die Temperaturabhängigkeit sog. gesättigter Kalomel- oder Silber/Silberchlorid.Bezugselektroden zu komplex und zu langsam ist. Übersättigungserscheinungen führen bekannterweise zu Hysterese-Erscheinungen und damit zu nicht kompensierbarem Verhalten. Besser verhalten sich hierbei Redox-Elektroden mit besonders reversiblen Redox-Systemen mit hoher Standardaustauschstromdlchte (z.B. Hexacyanoferrate II + III; Jod/Jodid, Ferrocen/Ferrocenium, Rutheniumkomplexe usw.). Da bei der Meßsonden-Anordnung die Probelösung sowieso mit Konditionierungslösung verdünnt wird, liegt es auf der Hand, dieser Konditionlerungslösung auch ein Redox-System in geeigneter Konzentration beizufügen und als Bezugselektrode einen einfachen Platindraht zu benutzen. Besonders vorteilhaft, weil symmetrisch aufgebaut, ist es dann, wenn die innere Potentialableitung der ISE auf dem gleichen System beruht, wobei für anionenselektive ISEs ein kationisches, für kationenselektive ein anionisches Redoxsystem zu wählen ist.

Zur Minimierung der Temperaturabhängigkeit derartiger ISE-Meßketten mit Platin-Redox-Bezugselektrode muß der sog. Isothermenschnittpunkt der Meßkette unter den späteren Meßbedingungen bestimmt werden. Dieser Schnittpunkt der Kalibrierkurven bei den verschiedenen Temperaturen wird nun durch eine geschickte Änderung der Innenlösung der ISE und des Redox-Systems in der Meßlösung in die Gegend um Null mV gelegt. Variable sind dabei: a) die Meßionenkonzentration in der ISE; b) das Verhältnis von oxidierter zu reduzierter Form des betreffenden Redox-Systems sowohl in der Innenlösung der ISE als auch in der äußeren Meßlösung. Sollte das reversible Redoxsystem zu teuer sein, reichen auch geringere Konzentrationen aus, wenn die Redoxpufferkapazität in diesem Fall von einem preiswerteren System in höherer Konzentration übernommen wird. Ähnliches gilt bezüglich toxikologischer Überlegungen.

Mit dem Hexacyanoferrat II/III-System konnte die Temperaturabhängigkeit der kompletten Meßsonde für Ammonium und Nitrat auf < als 0,1 % Fehler pro Grad Abweichung zwischen Kalibrierung und Messung zwischen 1 und 15 °C reduziert werden.

Literatur:

[1] K. Cammann:
Das Arbeiten mit ionenselektiven Elektroden,. 1. Aufl., Springer, Berlin 1973.

[2] J. Ruzicka, E.H. Hansen:
Flow Injection Analysis, Wiley, New York, 1981.

[3] J.G. Schindler, M.M. Schindler (Hrsg.):
Bioelektrische Membranelektroden, de Gruyter, Berlin 1983.

**Patentansprüche**

1. Verfahren zur Verlängerung der effektiven Einsatzzeit und bei minimaler Temperaturabhängigkeit, einer ionenselektiven Meßkette mit einer Bezugselektrode und einer ionenselektiven Meßelektrode, wobei die Meßelektrode in einem Gehäuse einen Meßionen enthaltenden Innenelektrolyten und eine ionenselektive, einen Weichmacher und eine elektroaktive Verbindung enthaltende Polymermembran aufweist, an die der Innenelektrolyt und die die zu messenden Ionen enthaltende Meßlösung angrenzen, und mit Redoxableitelementen für die innere Potentioalableitung als auch für die äußere Bezugselektrode, dadurch gekennzeichnet, dass der Innenelektrolyt und die Meßlösung sowohl an dem Weichmacher wie an der elektroaktiven Verbindung gesättigt werden und Redoxableitelemente verwendet werden, welche die oxidierte und die reduzierte Form des Redoxsystems in einem solchen Konzentrationsverhältnis aufweisen, dass der Isothermenschnittpunkt der Meßkette in der Mitte des Meßbereichs liegt, welcher zugleich bei ca. 0 mV liegt.

2. Verfahren nach Anspruch 1, dadurch gekennzeichnet, dass zur Sättigung des Innenelektrolyten und der Meßlösung mit dem Weichmacher und der elektroaktiven Verbindung in dem Innenelektrolyten und der Meßlösung eine hochdisperse Festphase mit großer spezifischer Oberfläche verwendet wird, die den Weichmacher und die elektroaktive Verbindung adsorbiert enthält.

3. Verfahren nach Anspruch 2, dadurch gekennzeichnet, dass zur Aufnahme der hochdispersen Festphase, die den Weichmacher und die elektroaktive Verbindung adsorbiert enthält, eine Konditionierpatrone verwendet wird.

4. Verfahren nach Anspruch 2 oder 3, dadurch gekennzeichnet, dass das Verhältnis der Oberfläche der ionenselektiven Polymermembran zu der Oberfläche der hochdispersen Festphase wesentlich kleiner als 1, vorzugsweise kleiner als 0,01 ist.

5. Verfahren nach einem der Ansprüche 2 bis 4, dadurch gekennzeichnet, dass die hochdisperse Festphase durch ein chromatographisches Trägermaterial gebildet wird und der Weichmacher und die elektroaktive Verbindung mit oder ohne Polymermatrix auf die Oberfläche des chromatographischen Trägermaterials aufgebracht sind.

6. Verfahren nach einem der Ansprüche 2 bis 5, dadurch gekennzeichnet, dass die elektroaktive Verbindung zusammen mit dem Meßion als Ionophor-Komplex oder Ionenpaarverbindung, an der hochdispersen Feststoffphase adsorbiert, verwendet wird.

7. Verfahren nach einem der Ansprüche 2 bis 6, dadurch gekennzeichnet, dass die hochdisperse Festphase zugleich als Feinfilter für die Meßlösung ausgebildet ist.

8. Verfahren nach Anspruch 1, dadurch gekennzeichnet, dass die Meßionen in dem Innenelektrolyten in einer solchen Konzentration enthalten sind, dass der Isothermenschnittpunkt der Meßkette in der Mitte des Meßbereichs und bei ca. 0 mV liegt, wobei ein reversibles Redoxsystem mit hoher Standardaustauschstromdichte an Platin oder einem anderen Edelmetall mit oder ohne weiterem Redox-Puffer als innere und äußere Ableitsysteme vorgesehen ist.

9. Verfahren nach Anspruch 8, dadurch gekennzeichnet, dass zur inneren und äußeren Potentialableitung von der ionenselektiven Polymermembran Edelmetall-Redoxelektroden verwendet werden.

10. Verfahren nach Anspruch 8, dadurch gekennzeichnet, dass das Redoxsystem zur inneren Potentialableitung innerhalb der Meßelektrode sich von dem Redoxsystem der äußeren Bezugselektrode unterscheidet.

11. Verfahren nach Anspruch 8, dadurch gekennzeichnet, dass solche reversiblen Redoxsysteme verwendet werden, bei denen sich die Temperaturabhängigkeit des U°-Terms in der Nernst-Gleichung kompensiert.

12. Verfahren nach Anspruch 8, dadurch gekennzeichnet, dass das reversible Redoxsystem als ein System ausgebildet ist, das durch Luftsauerstoff nicht beeinflußt wird und bei dem das Verhältnis von oxidiertem Zustand zu reduziertem Zustand so gewählt wird, dass der Isothermenschnittpunkt in der Mitte des Meßbereichs und bei ca. 0 mV liegt.

13. Verfahren nach Anspruch 8, dadurch gekennzeichnet, dass neben dem potentialbestimmenden reversiblen Redoxsystem noch weitere Redoxsysteme mit entsprechender Redox-Pufferkapazität verwendet werden, die ihr Redoxpotential dem reversiblen Redoxsystem aufprägen.

14. Verfahren zur Messung der Nitrat- und Ammoniumionenkonzentration im Grundwasser mit einer ammoniumionenselektiven Meßkette mit einer Bezugselektrode und einer Ammoiniumionenselektiven Meßelektrode, wobei die Meßelektrode in einem Gehäuse einen Ammoniumionen enthaltenden Innenelektrolyt und eine ammoniumionenselektive, einen Weichmacher und eine elektroaktive Verbindung enthaltene Polymermembran aufweist, an die der Innenelektrolyt und die die zu messenden Ammoniumionen enthaltende Meßlösung angrenzen, und mit Redox-Ableitelementen für die innere Potentialableitung als auch für die äußere Bezugselektrode, dadurch gekennzeichnet, dass der Innenelektrolyt und die Meßlösung sowohl an dem Weichmacher wie an der elektroaktiven Verbindung gesättigt werden und Redoxableitelemente verwendet werden, welche die oxidierte und die reduzierte Form des Redoxsystems in einem solchen Konzentrationsverhältnis aufweisen, dass der Isothermenschnittpunkt der Meßkette in der Mitte des Meßbereichs liegt, welcher zugleich bei ca. 0 mV liegt.

15. Verfahren nach Anspruch 14, dadurch gekennzeichnet, dass die Ammoniumionen aus dem Grundwasser durch Alkalisierung gasförmig abgetrennt und mittels einer Gasdiffusionszelle in einer Hilfslösung in der Meßlösung aufgefangen werden.

16. Verfahren nach Anspruch 15, dadurch gekennzeichnet, dass die automatische Messung der Nitrat- und Ammoniumionen im Grundwasser mittels einer einer Fließinjektionsanalyse ähnlichen Probenvorbereitung mit Ionenstärke-Einsteller und Redox-Puffer bei sich abzeichnenden Konzentrationsveränderungen beider Ionen häufiger erfolgt.

17. Verfahren nach Anspruch 16, dadurch gekennzeichnet, dass die Information über sich abzeichnende Konzentrationsveränderungen mit einer Meßelektrodenkombination, bei der eine Ammoniumionen-selektive Polymermembranelektrode gegen eine Nitrationen-selektive Polymermembranelektrode geschaltet wird, und mit einer unmittelbar in der Probenströmung positionierten Konditionierungspatrone, die eine hochdisperse Festphase enthält, an der der Weichmacher und die elektroaktive adsorbiert sind, erfolgt.

18. Verfahren nach Anspruch 17, dadurch gekennzeichnet, dass die Probe der Meßelektrodenkombination mit einer Pumpe zugeführt wird, die bei einer vorher wählbaren Meßketten-Spannungsänderung pro Zeiteinheit für die kontinuierliche Ammonium- und Nitrationenbestimmung mit Probenvorbereitung und Abtrennschritt gestartet wird.

19. Verfahren nach einem der Ansprüche 15, 17 und 18, dadurch gekennzeichnet, dass die Ammoniumionen- und Nitrationen-selektive Polymermembranelektrodenmeßkette während der Meßpausen in einer Konditionierlösung aufbewahrt wird, die mit dem Weichmacher und der elektroaktiven Verbindung gesättigt ist.

20. Verfahren nach Anspruch 19, dadurch gekennzeichnet, dass als Konditionierlösung die Kalibrierlösung mit dem höchsten Ammonium- und Nitratgehalt verwendet wird.

21. Verfahren nach Anspruch 15, dadurch gekennzeichnet, dass zur Indizierung eines Gefährdungspotentials für das Grundwasser die Verringerung des Nitratgehaltes und der gleichzeitige Anstieg der Ammoniumkonzentration im Grundwasser nach Passieren des kontaminierten Geländes verwendet wird.

22. Verfahren nach Anspruch 21, dadurch gekennzeichnet, dass mindestens zwei Meßsonden zur Messung der Ammonium- bzw. Nitrationenkonzentration verwendet werden, wobei eine im Oberstrombereich vor der Gefahrenstelle und eine im Unterstrombereich hinter der Gefahrenstelle positioniert wird.

23. Verfahren nach Anspruch 22, dadurch gekennzeichnet, dass neben den zwei Meßsonden noch weitere Meßsonden im unbelasteten Grundwasser positioniert werden, um eine bessere Vergleichbarkeit zu erzielen und die Aussagekraft der Messungen zu erhöhen.

24. Verfahren nach einem der Ansprüche 21 bis 23, dadurch gekennzeichnet, dass die mittels der Meßsonden gemessenen Daten zur Datenverarbeitung und -übertragung entweder mittels eines RAM-Packs gespeichert und bei Bedarf vor Ort abgerufen werden oder telemetrisch zur einer Zentrale übertragen werden.

25. Verfahren nach einem der Ansprüche 21 bis 24 dadurch gekennzeichnet, dass anstelle von zwei ionenselektiven Polymermembranelektroden für Nitrat und Ammonium mehrere identische, ferngesteuert in den Probestrom einbringbar, vorgehalten werden, um die Lebensdauer noch weiter zu steigern bzw. bei andersweitigem Versagen einer der beiden Polymermembranelektroden die Meßsonde nicht aus dem Grundwasser entfernen zu müssen.

26. Verfahren nach einem der Ansprüche 22 bis 25, dadurch gekennzeichnet, dass mindestens einer Hilfslösung in der Meßsonde Substanzen zugemischt werden, die ein Verkalken der Meßelektrodenoberfläche sowie ein Biofouling verhindern, was durch EDTA- bzw. Azidzusatz erreicht werden kann.

**Claims**

1. A method of prolonging the period of use, with minimum temperature-dependence, of an ion-selective measuring train comprising a reference electrode and an ion-selective measuring electrode, wherein the measuring electrode comprises, in a housing, an internal electrolyte containing ions to be measured and an ion-selective polymer membrane which contains a plasticiser and an electroactive compound and with which the internal electrolyte and the measuring solution which contains the ions to be measured are contiguous, and comprising redox conduction elements for the conduction of the internal potential and for the external reference electrode, characterised in that the internal electrolyte and the measuring solution are saturated both with the plasticiser and with the electroactive compound, and redox conduction elements are used which comprise the oxidised and reduced forms of the redox system in a concentration ratio such that the isothermal point of intersection of the measuring train is in the middle of the measuring range, which at the same time is about 0 mV.

2. A method according to claim 1, characterised in that a highly dispersed solid phase of high specific surface area, which contains the plasticiser and the electroactive compound in adsorbed form, is used in the internal electrolyte and in the measuring solution for the saturation of the internal electrolyte and of the measuring solution with the plasticiser and the electroactive compound.

3. A method according to claim 2, characterised in that a conditioning cartridge is used for receiving the highly dispersed solid phase which contains the plasticiser and the electroactive compound in adsorbed form.

4. A method according to claim 2 or 3, characterised in that the ratio of the surface area of the ion-selective polymer membrane to the surface area of the highly dispersed solid phase is significantly less than 1, preferably less than 0.01.

5. A method according to any one of claims 2 to 4, characterised in that the highly dispersed solid phase is formed by a chromatographic support material, and the plasticiser and the electroactive compound are deposited, with or without a polymer matrix, on the surface of the chromatographic support material.

6. A method according to any one of claims 2 to 5, characterised in that the electroactive compound, together with the ion to be measured, is adsorbed on the highly dispersed solid phase as an ionophore complex or an ion-pair compound.

7. A method according to any one of claims 2 to 6, characterised in that the highly dispersed solid phase is formed at the same time as a fine filter for the measuring solution.

8. A method according to claim 1, characterised in that the ions to be measured are contained in the internal electrolyte in a concentration such that the isothermal point of intersection of the measuring train is in the middle of the measuring range and is about 0 mV, wherein a reversible redox system, which has a high standard exchange current density on platinum or on another noble metal, is provided, with or without a further redox buffer, as the internal and external conduction systems.

9. A method according to claim 8, characterised in that noble metal redox electrodes are used for the internal and external conduction of the potential of the ion-selective polymer membrane.

10. A method according to claim 8, characterised in that the redox system for the internal conduction of the potential inside the measuring electrode is different from the redox system of the external reference electrode.

11. A method according to claim 8, characterised in that reversible redox systems are used for which the temperature-dependence of the $U^0$ term in the Nernst equation is compensated for.

12. A method according to claim 8, characterised in that the reversible redox system is designed as a system which is not affected by atmospheric oxygen and for which the ratio of the oxidised state to the reduced state is selected so that the isothermal point of intersection is in the middle of the measuring range and is about 0 mV.

13. A method according to claim 8, characterised in that in addition to the potential-determining reversible redox system, further redox systems with a corresponding redox buffer capacity are used, which impress their redox potential on the reversible redox system.

14. A method of measuring the concentration of nitrate and ammonium ions in groundwater using an ammonium ion-selective measuring train comprising a reference electrode and an ammonium ion-selective measuring electrode, wherein the measuring electrode contains, in a housing, an internal electrolyte containing ammonium ions and an ammonium ion-selective polymer membrane which contains a plasticiser and an electroactive compound and with which the internal electrolyte and a measuring solution which contains the ammonium ions to be measured are contiguous. and comprising redox conduction elements for the internal conduction of potential and for the external reference electrode. characterised in that the internal electrolyte and the measuring solution are saturated both with the plasticiser and with the electroactive compound, and redox conduction elements are used which contain the oxidised and reduced forms of the redox system in a concentration ratio such that the isothermal point of intersection of the measuring train is in the middle of the measuring range, and at the same time is about 0 mV.

15. A method according to claim 14, characterised in that the ammonium ions are separated from the groundwater in gaseous form by making the groundwater alkaline and are captured in the measuring solution by means of a gas diffusion cell in an auxiliary solution.

16. A method according to claim 15, characterised in that when changes become apparent in the concentrations of both ions, the automatic measurement of the nitrate and ammonium ions in groundwater is more commonly made by means of a sample preparation which is similar to flow injection analysis and which comprises ionic strength adjusting agents and redox buffers.

17. A method according to claim 16, characterised in that information on changes in concentration which become apparent is obtained by a measuring electrode combination in which an ammonium ion-selective polymer membrane electrode is connected in opposition to a nitrate ion-selective polymer membrane electrode, and by a conditioning cartridge which is positioned directly in the sample stream and which contains a highly dispersed solid phase on which the plasticiser and the electroactive compound are adsorbed.

18. A method according to claim 17, characterised in that the sample is fed to the measuring electrode combination by a pump, which is started at a previously selectable change in voltage per unit time, for the continuous determination of ammonium and nitrate ions comprising sample preparation and a separation step.

19. A method according to any one of claims 15, 17 and 18, characterised in that during gaps in measurement the ammonium ion- and nitrate ion-selective polymer membrane electrode measuring train is kept in a conditioning solution which is saturated with the plasticiser and with the electroactive compound.

20. A method according to claim 19, characterised in that the calibration solution with the highest ammonium and nitrate content is used as the conditioning solution.

21. A method according to claim 15, characterised in that a reduction in nitrate content and a simultaneous increase in ammonium concentration in the groundwater after passing through the contaminated terrain is used to indicate a danger potential for the groundwater.

22. A method according to claim 21, characterised in that at least two measuring probes are used for measuring the ammonium or nitrate ion concentration, wherein one is positioned in the upstream region in front of the endangered location and one is positioned in the downstream region behind the endangered location.

23. A method according to claim 22, characterised in that in addition to two measuring probes, further measuring probes are positioned in unpolluted groundwater in order to obtain a better comparability and to increase the meaningfulness of the measurements.

24. A method according to any one of 21 to 23, characterised in that, for data processing and transmission, the data which are measured by means of the measuring probes are either stored by means of an RAM pack and are retrieved locally as required or are transmitted by telemetry to an information centre.

25. A method according to any one of claims 21 to 24, characterised in that instead of two ion-selective polymer membrane electrodes for nitrate and ammonium a plurality of identical such electrodes is provided which can be introduced into the sample flow by remote control, in order to increase the service life yet further or in order not to have to remove the measuring probe from the groundwater or if there is any malfunction of one of the two polymer membrane electrodes.

26. A method according to any one of claims 22 to 25, characterised in that substances are admixed with at least one auxiliary solution in the measuring probe which prevent furring-up of the measuring electrode surface and which also prevent biofouling, as can be achieved by the addition of EDTA or acid.

**Revendications**

1. Procédé pour prolonger la durée réelle d'utilisation et rendre minimale la dépendance vis-à-vis de la température d'une chaîne de mesure sélective des ions, possédant une électrode de référence et une électrode de mesure sélective des ions, qui présente dans un logement un électrolyte interne contenant des ions du type mesuré et une membrane en polymère sélective vis-à-vis des ions, contenant un plastifiant et un composé électroactif, membrane à laquelle sont contigus l'électrolyte interne et la solution de mesure contenant les ions à mesurer, et possédant des éléments de dérivation Rédox pour la dérivation de potentiel interne et aussi pour l'électrode de référence externe, caractérisé en ce que l'électrolyte interne et la solution de mesure sont saturés aussi bien en plastifiant qu'en composé électroactif et en ce que l'on utilise des éléments de dérivation Rédox qui présentent la forme oxydée et la forme réduite du système Rédox selon un rapport des concentrations tel que le point d'intersection des isothermes de la chaîne de mesure se situe au milieu du domaine de mesure, ledit point se situant en même temps à environ 0 mV.

2. Procédé selon la revendication 1, caractérisé en ce que, pour la saturation de l'électrolyte interne et de la solution de mesure en plastifiant et en composé électroactif, on utilise dans l'électrolyte interne et dans la solution de mesure une phase solide très dispersée, ayant une surface spécifique élevée, qui contient le plastifiant et le composé électroactif à l'état adsorbé.

3. Procédé selon la revendication 2, caractérisé en ce que l'on utilise une cartouche de conditionnement pour l'introduction de la phase solide très dispersée qui contient le plastifiant et le composé électroactif à l'état adsorbé.

4. Procédé selon la revendication 2 ou 3, caractérisé en ce que le rapport de la surface de la membrane en polymère sélective vis-à-vis des ions à la surface de la phase solide très dispersée est nettement inférieur à 1 et de préférence inférieur à 0,01.

5. Procédé selon l'une quelconque des revendications 2 à 4, caractérisé en ce que la phase solide très dispersée est constituée d'une matière support pour chromatographie et en ce que le plastifiant et le composé électroactif sont appliqués, avec ou sans matrice polymère, sur la surface de la matière support pour chromatographie.

6. Procédé selon l'une quelconque des revendications 2 à 5, caractérisé en ce que l'on utilise le composé électroactif en combinaison avec l'ion du type mesuré, sous la forme d'un complexe ionophore ou d'un composé à paire d'ions, qui est adsorbé sur la phase solide très dispersée.

7. Procédé selon l'une quelconque des revendications 2 à 6, caractérisé en ce que la phase solide très dispersée forme en même temps un filtre fin pour la solution de mesure.

8. Procédé selon la revendication 1, caractérisé en ce que les ions du type mesuré figurent dans l'électrolyte interne à une concentration telle que le point d'intersection des isothermes de la chaîne de mesure se situe au milieu du domaine de mesure et à environ 0 mV, un système Rédox réversible, ayant une densité de courant d'échange type élevée sur le platine ou un autre métal noble, avec ou sans autre tampon Rédox, étant prévu comme système de dérivation interne et externe.

9. Procédé selon la revendication 8, caractérisé en ce que l'on utilise des électrodes Rédox en métal noble pour la dérivation de potentiel interne et externe de la membrane en polymère sélective vis-à-vis des ions.

10. Procédé selon la revendication 8, caractérisé en ce que le système Rédox pour la dérivation de potentiel interne à l'intérieur de l'électrode de mesure est différent du système Rédox de l'électrode de référence externe.

11. Procédé selon la revendication 8, caractérisé en ce que l'on utilise des systèmes Rédox réversibles pour lesquels les dépendances vis-à-vis de la température du terme $U°$ de l'équation de Nernst se compensent.

12. Procédé selon la revendication 8, caractérisé en ce que le système Rédox réversible est constitué d'un système qui n'est pas influencé par l'oxygène de l'air et pour lequel le rapport de l'état oxydé à l'état réduit est choisi de telle manière que le point d'intersection des isothermes se situe au milieu du domaine de mesure et à environ 0 mV.

13. Procédé selon la revendication 8, caractérisé en ce que l'on utilise, outre le système Rédox réversible déterminant le potentiel, d'autres systèmes Rédox ayant une capacité de tampon Rédox convenable, qui communiquent leur potentiel Rédox au système Rédox réversible.

14. Procédé pour mesurer la concentration des ions nitrates et la concentration des ions ammonium dans les eaux souterraines, au moyen d'une chaîne de mesure sélective des ions ammonium, possédant une électrode de référence et une électrode de mesure sélective des ions ammonium, qui présente dans un logement un électrolyte interne contenant des ions ammonium et une membrane en polymère sélective vis-à-vis des ions ammonium, contenant un plastifiant et un composé électroactif, membrane à laquelle sont contigus l'électrolyte interne et la solution de mesure contenant les ions ammonium à mesurer, et possédant des éléments de dérivation Rédox pour la dérivation de potentiel interne et aussi pour l'électrode de référence externe, caractérisé en ce que l'électrolyte interne et la solution de mesure sont saturés aussi bien en plastifiant qu'en composé électroactif et en ce que l'on utilise des éléments de dérivation Rédox qui présentent la forme oxydée et la forme réduite du système Rédox selon un rapport des concentrations tel que le point d'intersection des isothermes de la chaîne de mesure se situe au milieu du domaine de mesure, ledit point se situant en même temps à environ 0 mV.

**15.** Procédé selon la revendication 14, caractérisé en ce que les ions ammonium sont séparés des eaux souterraines par alcalinisation avec formation de gaz et sont recueillis au moyen d'une cellule à diffusion de gaz dans une solution auxiliaire en tant que solution de mesure.

**16.** Procédé selon la revendication 15, caractérisé en ce que la détermination automatique des ions nitrates et des ions ammonium dans les eaux souterraines a lieu plus fréquemment lorsque se dessinent des modifications de concentration des deux ions, grâce à un traitement préalable des échantillons par un agent réglant la force ionique et un tampon Rédox, traitement semblable à celui d'une analyse par injection en continu.

**17.** Procédé selon la revendication 16, caractérisé en ce que les informations sur les modifications de concentration qui se dessinent sont données par une combinaison d'électrodes de mesure dans laquelle une électrode à membrane en polymère, sélective vis-à-vis des ions ammonium, est opposée à une électrode à membrane en polymère, sélective vis-à-vis des ions nitrates, et au moyen d'une cartouche de conditionnement placée directement dans le courant d'échantillons, qui contient une phase solide très dispersée sur laquelle sont adsorbés le plastifiant et le composé électroactif.

**18.** Procédé selon la revendication 17, caractérisé en ce que l'échantillon est amené à la combinaison d'électrodes de mesure par une pompe qui est amorcée à une variation de la tension de la chaîne de mesure par unité de temps que l'on peut choisir au préalable, pour la détermination en continu des ions ammonium et des ions nitrates avec traitement préalable des échantillons et étape de séparation.

**19.** Procédé selon l'une quelconque des revendications 15, 17 et 18, caractérisé en ce que la chaîne de mesure à électrodes à membrane en polymère, sélective vis-à-vis des ions ammonium et vis-à-vis des ions nitrates, est conservée pendant les interruptions des mesures dans une solution de conditionnement qui est saturée en plastifiant et en composé électroactif.

**20.** Procédé selon la revendication 19, caractérisé en ce que l'on utilise comme solution de conditionnement la solution d'étalonnage ayant la teneur la plus élevée en ions ammonium et en ions nitrates.

**21.** Procédé selon la revendication 15, caractérisé en ce que l'on utilise pour indiquer un potentiel de risque pour les eaux souterraines, la diminution de la concentration des ions nitrates et l'augmentation simultanée de la concentration des ions ammonium dans les eaux souterraines, après traversée du terrain pollué.

**22.** Procédé selon la revendication 21, caractérisé en ce que l'on utilise au moins deux sondes de mesure pour la mesure de la concentration des ions ammonium ou de la concentration des ions nitrates, l'une des sondes étant placée dans le courant en amont de la zone dangereuse et l'autre dans le courant en aval de la zone dangereuse.

**23.** Procédé selon la revendication 22, caractérisé en ce que l'on place dans les eaux souterraines non chargées, outre les deux sondes de mesure, d'autres sondes de mesure afin d'obtenir une meilleure comparaison et d'augmenter la fiabilité des mesures.

**24.** Procédé selon l'une quelconque des revendications 21 à 23, caractérisé en ce que, pour leur traitement et leur transmission, les données obtenues au moyen des sondes de mesure sont stockées à l'aide d'un bloc mémoire RAM et prélevées au besoin sur place ou sont transmises par télétransmission à un central.

**25.** Procédé selon l'une quelconque des revendications 21 à 24, caractérisé en ce que, au lieu de deux électrodes à membrane en polymère sélectives vis-à-vis des ions, pour les ions nitrates et les ions ammonium, on en met plusieurs identiques que l'on peut introduire de manière télécommandée dans le courant d'échantillons, afin d'augmenter encore la durée de vie ou de ne pas avoir à ôter la sonde de mesure des eaux souterraines lors d'une autre défaillance de l'une des deux électrodes à membrane en polymère.

**26.** Procédé selon l'une quelconque des revendications 22 à 25, caractérisé en ce que l'on ajoute à au moins une solution auxiliaire de la sonde de mesure des substances qui empêchent le dépôt de calcaire sur la surface des électrodes de mesure et les salissures d'origine biologique, ce que l'on peut obtenir par addition d'EDTA et d'azoture, respectivement.

FIG. 1a

traditionelle Meßkette

FIG. 1b

Meßkette mit verlagertem Isothermenschnitt-punkt

1: T = 323 K (ca. 64 mV/Aktivitätsdekade)
2: T = 298 K (ca. 59 mV/Aktivitätsdekade)
3: T = 273 K (ca. 54 mV/Aktivitätsdekade)

VERSCHLUSSKAPPE

ELEKTRODENKÖRPER

Ag/AgCl - IONENABLEITUNG

IONENELEKTROLYT

RESERVOIR FÜR IONOPHOR
UND WEICHMACHER

PVC - MEMBRAN

FIG. 2

DIREKT NACH
FERTIGSTELLUNG

NACH ÜBER
EINJÄHRIGER
BETRIEBSZEIT

FIG. 3

FIG. 4